Europäisches Patentamt

European Patent Office

Office européen des brevets

(19)

(11) Numéro de publication: **0 017 524**
**A1**

## (12) DEMANDE DE BREVET EUROPEEN

(21) Numéro de dépôt: **80400327.5**

(22) Date de dépôt: **13.03.80**

(51) Int. Cl.³: **H 02 K 23/04**
**H 02 K 5/14, H 02 K 1/14**

(30) Priorité: **29.03.79 FR 7907852**

(43) Date de publication de la demande:
**15.10.80 Bulletin 80/21**

(84) Etats Contractants Désignés:
**DE GB IT**

(71) Demandeur: **DUCELLIER & Cie**
**Echat 950**
**F-94024 Creteil Cedex(FR)**

(72) Inventeur: **Peghaire, Pierre**
**6, Avenue de Ste Florine**
**F-63570 Brassac Les Mines(FR)**

(74) Mandataire: **Habert, Roger**
**2, rue Boulle Echat 950**
**F-94024 Creteil Cedex(FR)**

(54) **Machine tournante, notamment petit moteur.**

(57) Cette machine tournante, du type comprenant une carcasse métallique (1) à l'intérieur de laquelle est disposé au moins un aimant permanent et dont les extrémités sont obturées par des flasques paliers (4 et 5) supportant le rotor alimenté électriquement par des balais (7) coulissant dans un porte balais (8) est caractérisé en ce que les flasques paliers (4 et 5) avantageusement réalisés en matière plastique, comportent de matière des moyens élastiques qui absorbent, lors du montage, les écarts de cotes dûs aux tolérances de fabrication des différents éléments constitutifs de la machine tout en maintenant les aimants (2,3) et le porte balais(8).

_FIG.1_

0017524

- 1 -

Machine tournante, notamment petit moteur.

La présente invention concerne une machine tournante, notamment petit moteur électrique pour l'équipement des véhicules automobiles, du type comprenant une carcasse métallique à l'intérieur de laquelle est disposé au moins un aimant permanent et dont les extrémités sont obturées par des flasques paliers supportant le rotor alimenté électriquement par des balais coulissant dans un porte balais.

Dans les petits moteurs de ce type, les différents éléments sont fixés par des moyens qui sont propres à chacun d'eux d'où une multiplicité de moyens et de ce fait un prix de revient en main d'oeuvre et en pièces élevé.

De plus l'usinage de ces différentes pièces nécessite un usinage rigoureux afin que leurs tolérances permettent dans tous les cas un assemblage précis.

La présente invention vise à remédier à ces inconvénients et concerne à cet effet une machine du type précité caractérisé en ce que les flasques paliers avantageusement réalisées en matière plastique, comportent de matière des moyens élastiques qui absorbent, lors du montage, les écarts de cotes dûs aux tolérances de fabrication des différents éléments constitutifs de la machine tout en maintenant l'aimant et le porte balais.

Selon une autre caractéristique de l'invention les moyens élastiques sont constitués par deux paires de branches parallèles diamétralement opposées, formant un U avec le flasque palier et venant en appui élastique simultanément, lors du montage, sur les chants et les cotés des aimants ainsi que sur le porte balais, pour assurer leur positionnement et leur immobilisation, grâce à des lumières déformables ménagées longitudinalement ou transversalement sur

les branches, au droit de ces éléments, selon le sens des contraintes élastiques à absorber lors du montage.

Selon une autre caractéristique de l'invention les flasques paliers formant la carcasse à chacune de ses extrémités sont maintenus sous contrainte élastique des branches et verrouillés par l'intermédiaire d'au moins deux tirants obtenus par découpage d'une tôle et comportant à une extrémité un talon en appui sur un des flasques, l'autre extrémité étant vrillée après avoir traversé une lumière correspondante à la section des tirants, ménagée dans l'autre flasque.

La description qui va suivre en regard des dessins annexés fera mieux comprendre comment l'invention peut être réalisée.

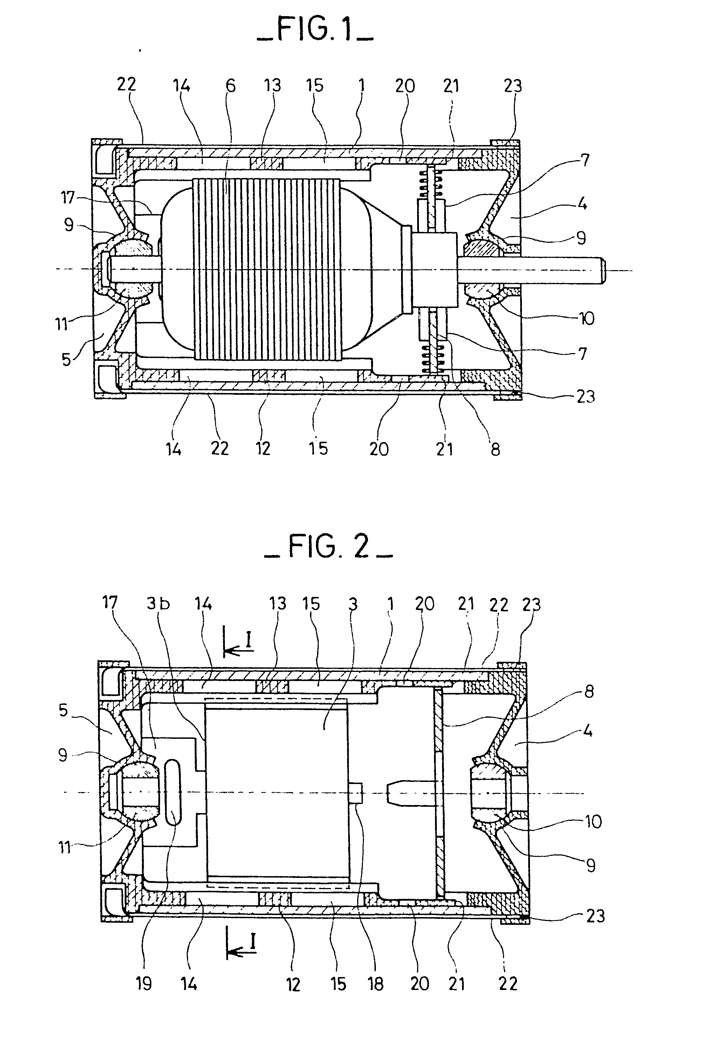

Les figures 1 et 2 sont des vues en coupe d'un moteur suivant l'invention, respectivement avec et sans rotor.

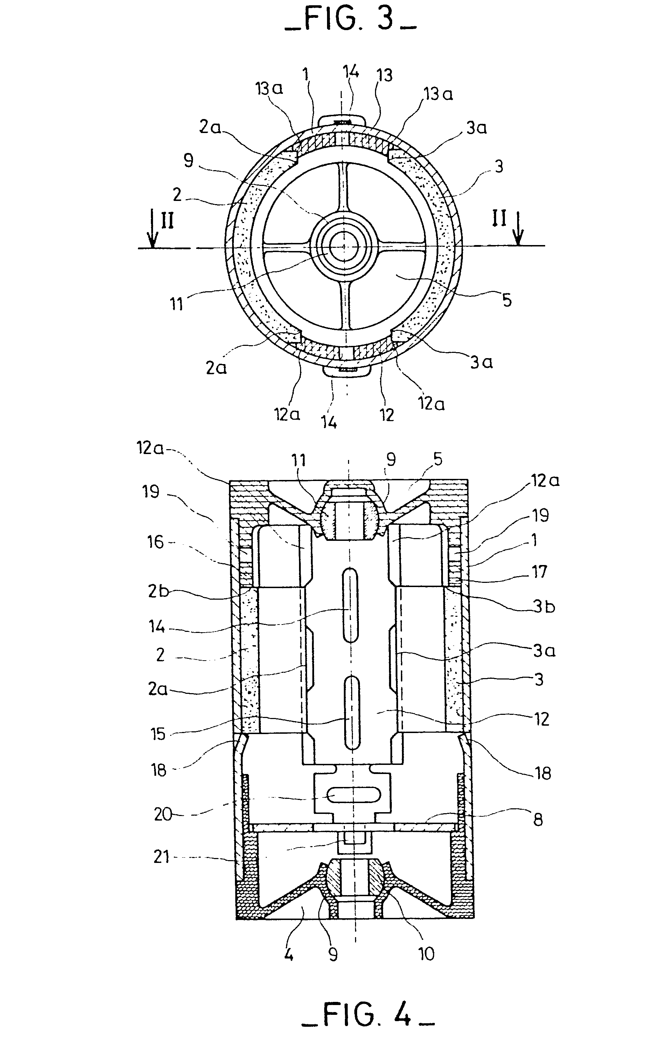

La figure 3 est une vue en coupe suivant la ligne II de la figure 2.

La figure 4 est une vue en coupe suivant la ligne II II de la fig.3.

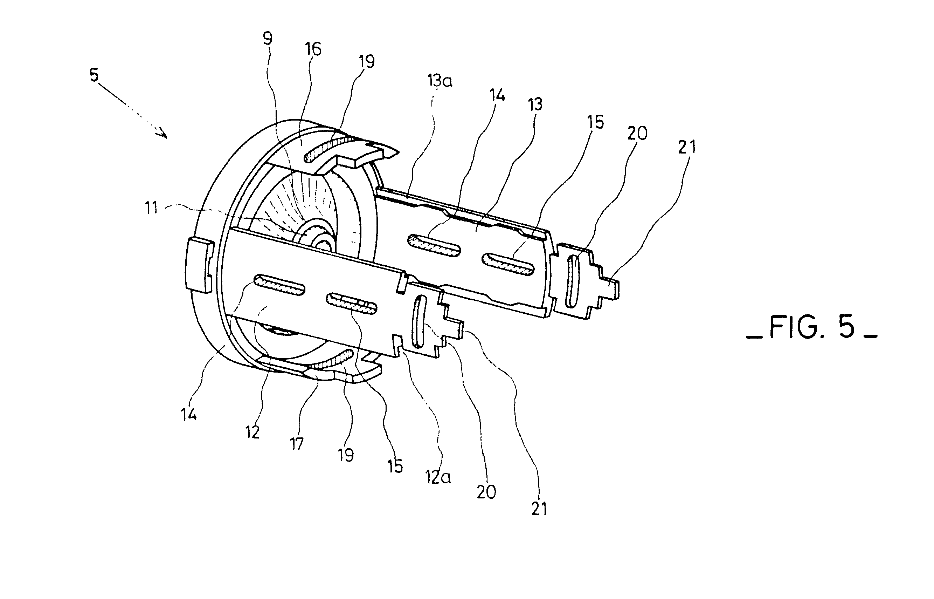

La figure 5 est une vue en perspective d'un flasque palier fermant l'une des extrémités du moteur suivant l'invention.

Le moteur représenté sur les figures comporte de manière connue une carcasse métallique 1 à l'intérieur de laquelle sont disposés deux aimants permanents 2 et 3. Les extrémités de la carcasse 1 sont obturées par des flasques paliers 4 et 5 supportant le rotor 6 alimenté par des balais 7 coulissant dans un porte balai 8.

Les flasques paliers 4 et 5 sont réalisés par moulage de matière plastique et ferment la carcasse 1 à la manière de bouchons.

Ils comportent en leur centre un siège élastique 9 apte à permettre l'encliquetage des rotules 10 et 11 supportant le rotor 6.

Selon la caractéristique principale de l'invention les flasques paliers 4 et 5 comportent également des moyens élastiques qui absorbent, lors du montage, les écarts de cotes dûs aux tolérances de fabrication des différents élements constitutifs de la machine tout en maintenant les aimants 2 et 3 et le porte balais 8.

Les moyens élastiques sont constitués par une première paire de branches 12 et 13 parallèles, diamétralement opposées et formant un U avec le flasque palier 5.

Les branches 12 et 13 comportent sur leurs chants une glissière 12a et 13a de forme correspondante aux chants 2a et 3a des aimants 2 et 3 de façon à permettre le montage et à assurer le maintien de ces derniers contre la carcasse 1, par repoussement élastique des branches 12 et 13, élasticité conférée par des lumières déformables et longitudinales 14 et 15 ménagées sur les branches 12 et 13 au droit des aimants 2 et 3.

Le positionnement longitudinal des aimants 2 et 3 s'effectue simultanément grace à une seconde paire de branches 16 et 17 également parallèles, diamétralement opposées et formant un U avec le flasque palier 5 et un angle de 90° avec la première paire de branche 12 et 13.

Le repoussement longitudinal des aimants 2 et 3 s'effectue jusqu'à leur mise en butée avec deux languettes 18 faisant saillies vers l'intérieur de la carcasse 1 et obtenues par repoussage et leur maintien élastique est obtenu grace à une lumière déformable transversale 19 ménagée au droit des extrémités $2b$ et $3b$ des aimants 2 et 3.

Pendant le même temps et au cours de la même opération de montage les extrémités des branches 12 et 13 viennent en contact avec le porte balais 8, préalablement disposé sur le flasque palier 4, pour le pincer de manière également élastique, grâce à une lumière transversale, déformable 20 ménagée à chaque extrémité des branches 12 et 13 au droit du porte balais 8.

Chacune des extrémités des branches 12 et 13 comporte un ergot de positionnement 21 devant s'engager dans des encoches périphériques correspondantes du porte balais 8 pour le centrer par rapport aux aimants 2 et 3.

Le moteur ainsi monté pourrait continuerà n'avoir recours à aucun moyen de fixation car le montage des différents éléments précités sont effectués par emmanchement à forceà la presse.

Néanmoins pour une question de sécurité, les flasques paliers 4 et 5 fermant la carcasse 1 à chacune de ses extrémités sont maintenus sous contrainte élastique et verrouillés par l'intermédiaire de deux tirants 22 obtenus par découpage d'une tôle et comportant à une extrémité un talon 23 en appui sur le flasque 4, l'autre extrémité étant vrillée après avoir traversé une lumière correspondante à la section des tirants 22, ménagée dans l'autre flasque 5.

Il est bien entendu que de nombreuses modifications peuvent être apportées à ce mode de réalisation cité à titre d'exemple sans pour cela sortir du cadre de la présente invention

Revendications de brevet.

1 - Machine tournante, notamment petit moteur électrique pour l'équipement des véhicules automobiles, du type comprenant une carcasse métallique (1) à l'intérieur de laquelle est disposé au moins un aimant permanent et dont les extrémités sont obturées par des flasques paliers (4 et 5) supportant le rotor (6) alimenté électriquement par des balais (7) coulissant dans un porte balais (8), caractérisé en ce que les flasques paliers (4 et 5) avantageusement réalisés en matière plastique, comportent de matière des moyens élastiques qui absorbent, lors du montage, les écarts de cotes dûs aux tolérances de fabrication des différents éléments constitutifs de la machine tout en maintenant l'aimant et le porte balais (8).

2 - Machine tournante selon la revendication 1 caractérisé en ce que les moyens élastiques sont constitués par deux paires de branches (12,13 et 16,17) parallèles diamètralement opposées, formant un U avec le flasque palier (5) et venant en appui élastique simultanément, lors du montage, sur les chants et les cotés des aimants (2 et 3) ainsi que sur le porte balais (8), pour assurer leur positionnement et leur immobilisation, grâce à des lumières déformables ménagées longitudinalement (14,15) ou transversalement (19,20) sur les branches, au droit de ces éléments, selon le sens des contraintes élastiques à absorber lors du montage.

3 - Machine tournante selon la revendication 1, caractérisé en ce que les flasques paliers (4 et 5) fermant la carcasse (1) à chacune de ses extrémités sont maintenus sous contrainte élastique des branches et verrouillés par l'intermédiaire d'au moins deux tirants (22) obtenus par découpage d'une tôle et comportant à une extrémité un talon (23) en appui sur un des flasques (4), l'autre extrémité étant vrillée après avoir traversée une lumière correspondante à la section des tirants ménagée dans l'autre flasque (5).

1/3

_FIG.1_

_FIG. 2_

_FIG. 3_

_FIG. 4_

_ FIG. 5 _

## Office européen des brevets

# RAPPORT DE RECHERCHE EUROPEENNE

Numéro de la demande

EP 80 40 0327

| DOCUMENTS CONSIDERES COMME PERTINENTS | | | CLASSEMENT DE LA DEMANDE (Int. Cl. 3) |
|---|---|---|---|
| Catégorie | Citation du document avec indication, en cas de besoin, des parties pertinentes | Revendication concernee | |
| | <u>US - A - 4 071 794</u> (GENERAL MOTORS) <br> * Colonne 1, ligne 58 à colonne 2, ligne 3; colonne 2, lignes 13-33 * <br><br> -- <br><br> <u>FR - A - 2 282 182</u> (BOSCH GmbH) <br> * Page 5, lignes 20-37 * <br><br> -- | 1,2 | H 02 K 23/04 <br> H 02 K 5/14 <br> H 02 K 1/14 |
| | <u>FR - A - 2 020 691</u> (FORD) <br> * Page 4, lignes 28-34; page 5, lignes 17-22; page 6, lignes 5-13; page 6, lignes 22-32 * <br><br> -- | 1,2 | **DOMAINES TECHNIQUES RECHERCHES (Int. Cl. 3)** <br><br> H 02 K 23/40 <br> 23/04 <br> 5/14 <br> 5/15 <br> 5/16 <br> 1/14 |
| | <u>FR - A - 2 361 009</u> (GAKKEN, NOGUCHI) <br> * Page 5, ligne 29 à page 6, ligne 2 * <br><br> -- | 3 | |
| A | <u>FR - A - 1 559 701</u> (MARCHAL SA) <br> * Page 2, colonne de gauche, lignes 41-46; page 2, colonne de droite, lignes 19-44 * <br><br> -- | | |
| A | <u>US - A - 3 135 887</u> (SHAFFAN/ ATLAS TOOL) <br> * Colonne 1, lignes 50-55; colonne 1, lignes 65-70 * <br><br> -- | | **CATEGORIE DES DOCUMENTS CITES** <br><br> X: particulièrement pertinent <br> A: arrière-plan technologique <br> O: divulgation non-ecrite <br> P: document intercalaire <br> T: théorie ou principe à la base de l'invention <br> E: demande faisant interférence <br> D: document cité dans la demande <br> L: document cité pour d'autres raisons |
| A | <u>US - A - 3 100 270</u> (CASE, REXFORD/ MARX) <br><br> ./. | | &: membre de la même famille, document correspondant |

| | Le présent rapport de recherche a ete établi pour toutes les revendications | | |
|---|---|---|---|
| Lieu de la recherche <br> La Haye | Date d'achevement de la recherche <br> 05-06-1980 | Examinateur <br> TANGOCCI | |

OEB Form 1503.1 06.78

| DOCUMENTS CONSIDERES COMME PERTINENTS | | | CLASSEMENT DE LA DEMANDE (Int. Cl. ³) |
|---|---|---|---|
| Catégorie | Citation du document avec indication, en cas de besoin, des parties pertinentes | Revendication concernée | |
| | * Colonne 3, lignes 36-44; colonne 3, lignes 51-58 * <br><br> -- | | |
| A | US - A - 3 138 728 (VIDETIC,LEECE NEVILLE CO.) <br><br> * Colonne 3, lignes 21-24; colonne 3, lignes 36-43 * <br><br> -- | | |
| A | FR - A - 2 249 468 (MARCHAL SA) <br><br> -- | | |
| AP | FR - A - 2 430 122 (PEUGEOT) <br><br> * Page 3, ligne 26 à page 4, ligne 5; page 4, ligne 11 à ligne 16 * <br><br> ---- | | DOMAINES TECHNIQUES RECHERCHES (Int. Cl. ³) |

OEB Form 1503.2  06.78